# EUROPEAN PATENT APPLICATION

(11) **EP 4 841 498 A1**
(43) Date of publication of application: **18.11.2026**
(21) Application number: 26177228.9
(22) Date of filing: 07.05.2026
(51) Int. Cl.: G06F 40/30

(54) **IDENTIFICATION AND RECTIFICATION OF HALLUCINATIONS IN AI-GENERATED CONTENT**

(30) Priority: 14.05.2025 US 202519208257
(71) Applicant: Microsoft Technology Licensing, LLC, Redmond, WA 98052 (US)
(72) Inventor: DESJARDINS, Robert Tyler Kazuo, Redmond, Washington, 98052 (US); GOOI, Chungheong, Redmond, Washington, 98052 (US); HE, Chujie, Redmond, Washington, 98052 (US); GAN, Qiang, Redmond, Washington, 98052 (US)
(74) Representative: CMS Cameron McKenna Nabarro Olswang LLP

(57) **Abstract**

Disclosed solutions identify and rectify hallucinations in artificial intelligence (AI) generated content, such as outputs from large language models (LLMs) or other language models. Examples leverage an LLM-based hallucination identifier that compares model-generated output (e.g., output from an LLM employed by a user) with input context (e.g., the dataset from which responses are drawn) and the original query to identify hallucinations. In some use cases, phrases containing candidate hallucinations are tagged with a category and score for likelihood of being a hallucination. An LLM-based rectifier is prompted with the hallucination tags and uses the context and the original query to replace the tagged phrases of the original model-generated output. In some use cases, the tagged phrases (or absence) are used in a deployment or pull request decision for an LLM, with more severely-hallucinating LLMs identified for remedial action. Some use cases test prompt engineering approaches for effectiveness.

## Description

### BACKGROUND

Although language models, such as large language models (LLMs) provide significant benefits to users, they have a critical flaw - hallucinations. Hallucinations occur when a language model generates an output that is incorrect or inconsistent with the input data (e.g., the language model creates a false purported fact). This reduces confidence in artificial intelligence (AI) models. (AI and machine learning, ML, are used synonymously herein.) AI developers invest significant effort in tuning prompts (i.e., prompt engineering) in attempts to reduce hallucinations. However, even carefully-crafted prompts do not provide guarantees of eliminating hallucinations. Developers are not able to anticipate every possible user query or other prompt inputs, and some edge cases defy tuning.

### SUMMARY

The disclosed examples are described in detail below with reference to the accompanying drawing figures listed below. The following summary is provided to illustrate some examples disclosed herein.

Solutions disclosed herein identify and rectify hallucinations in artificial intelligence (Al) generated content. Examples receive, by a hallucination identifier, a first model-generated output; identify, by the hallucination identifier, a first candidate hallucination within the first model-generated output, using at least a first user query and context that had been used to generate the first model-generated output, wherein identifying the first candidate hallucination comprises: marking a first passage of the first model-generated output, containing the first candidate hallucination, with a first hallucination tag comprising a first hallucination category and a first score; generate a first rectifier prompt including at least the first passage, the first hallucination tag, and an identification of the context; generate, by a rectifier model, a rectified model-generated output using at least the first rectifier prompt and the context; and transmit, to a user portal, the rectified model-generated output.

Additional examples generate a first language model prompt using a first user query; generate, by a first language model, a first model-generated output using context and the first language model prompt; receive, by a hallucination identifier, the first model-generated output; identify, by the hallucination identifier, a first candidate hallucination within the first model-generated output, using at least the first user query and the context, wherein identifying the first candidate hallucination comprises: marking a first passage of the first model-generated output, containing the first candidate hallucination, with a first hallucination tag comprising a first hallucination category and a first score; and generate a first hallucination report including at least the first passage and the first hallucination tag.

### BRIEF DESCRIPTION OF THE DRAWINGS

The disclosed examples are described in detail below with reference to the accompanying drawing figures listed below:
FIG. 1 illustrates an example architecture that advantageously identifies and rectifies hallucinations in artificial intelligence (AI) generated content;
FIG. 2 illustrates further detail for a component of the example architecture of FIG. 1;
FIGs. 3A-3I illustrate textual material for an example use case for the architecture of FIG. 1, which is described in relation to FIGs. 1 and 2;
FIG. 4 illustrates further detail for components of the example architecture of FIG. 1 for another use case;
FIG. 5 also illustrates further detail for components of the example architecture of FIG. 1 for yet another use case;
FIGs. 6A-6D, 7A, and 7B show flowcharts illustrating exemplary operations that may be performed when using example architectures, such as the architecture of FIG. 1; and
FIG. 8 shows a block diagram of an example computing device suitable for implementing some of the various examples disclosed herein.
Corresponding reference characters indicate corresponding parts throughout the drawings.

### DETAILED DESCRIPTION

Disclosed solutions identify and rectify hallucinations in artificial intelligence (AI) generated content, such as outputs from large language models (LLMs) or other language models. Examples leverage an LLM-based hallucination identifier that compares model-generated output (e.g., output from an LLM employed by a user) with input context (e.g., the dataset from which responses are drawn) and the original query to identify hallucinations. In some use cases, phrases containing candidate hallucinations are tagged with a category and score for likelihood of being a hallucination. An LLM-based rectifier is prompted with the hallucination tags and uses the context and the original query to replace the tagged phrases of the original model-generated output. In some use cases, the tagged phrases (or absence) are used in a deployment or pull request decision for an LLM, with more severely-hallucinating LLMs identified for remedial action. Some use cases test prompt engineering approaches for effectiveness.

Aspects of the disclosure solve multiple problems that are necessarily rooted in computer technology, and render use of computing platforms more reliable and trustworthy for language-based tasks, by providing the practical result of reduced language model hallucinations. The reduction in hallucinations may be achieved while reducing the burden of careful tuning of prompts. These advantageous results are accomplished, at least in part, by marking a first passage of a first model-generated output, containing a first candidate hallucination, with a first hallucination tag comprising a first hallucination category and a first score.

The various examples will be described in detail with reference to the accompanying drawings. Wherever preferable, the same reference numbers will be used throughout the drawings to refer to the same or like parts. References made throughout this disclosure relating to specific examples and implementations are provided solely for illustrative purposes but, unless indicated to the contrary, are not meant to limit all examples.

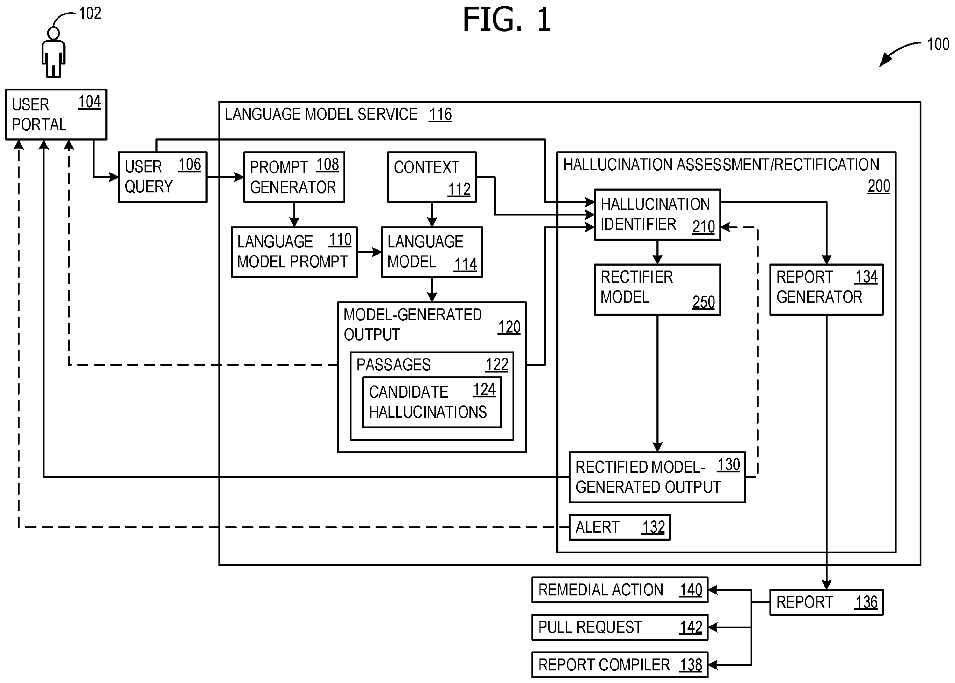

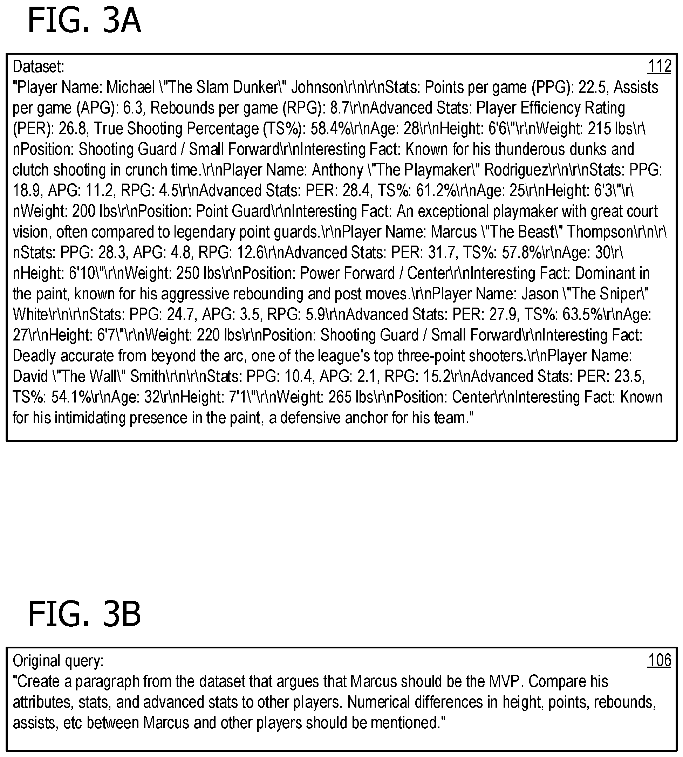

FIG. 1 illustrates an example architecture 100 that advantageously identifies and rectifies hallucinations in AI generated content. In FIG. 1, a user 102 employs a language model service 116, via a user portal 104 (e.g., a terminal or a user account for a cloud service), to answer a user query 106 with a language model 114. Language model 114 may be an LLM, a multi-model model (MM) or anther AI or machine learning (ML) model. Language model service 116 uses a prompt generator 108 to transform user query 106 into a language model prompt 110. Language model 114 uses language model prompt 110 and context 112 (e.g., source data) to respond to user query 106. An example of context 112 is shown in FIG. 3A, and an example of user query 106 is shown in FIG. 3B.

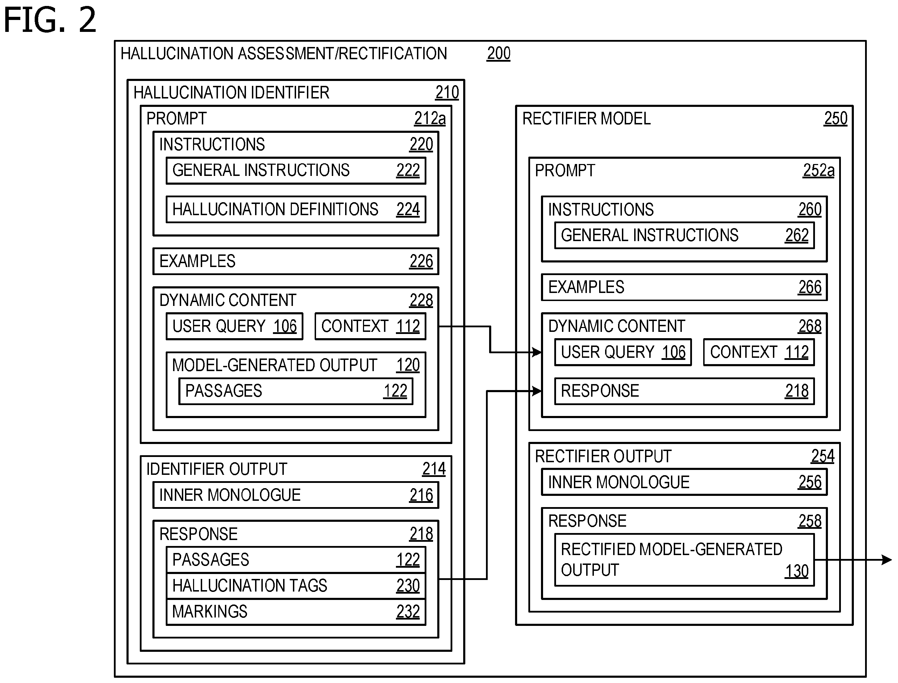

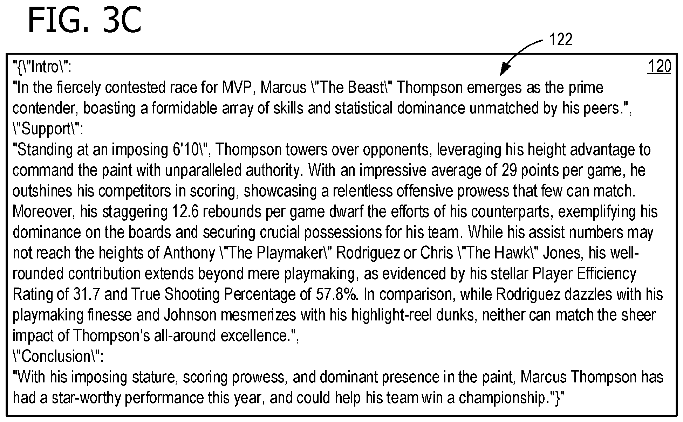

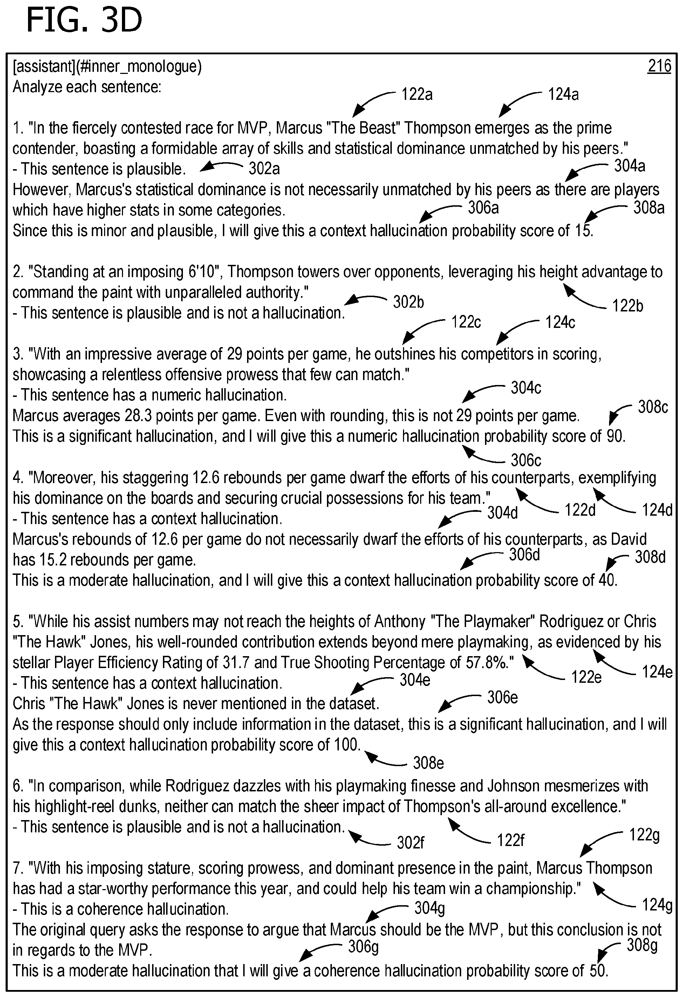

Language model 114 generates model-generated output 120 containing passages 122, an example of which is shown in FIG. 3C. At least some of passages 122 have candidate hallucinations 124, examples of which are shown in FIG. 3D. Model-generated output 120 is provided to a hallucination assessment/rectification service 200, along with context 112 and user query 106. Hallucination assessment/rectification service 200 has a hallucination identifier 210 and a rectifier model 250. Either of hallucination identifier 210 and rectifier model 250 may include, or be based on, a language model, such as an LLM. The output of hallucination identifier 210 is provided to rectifier model 250, which generates a rectified model-generated output 130 that has fewer and/or less sever hallucinations than model-generated output 120. Further detail for both hallucination identifier 210 and rectifier model 250 is shown in FIG. 2.

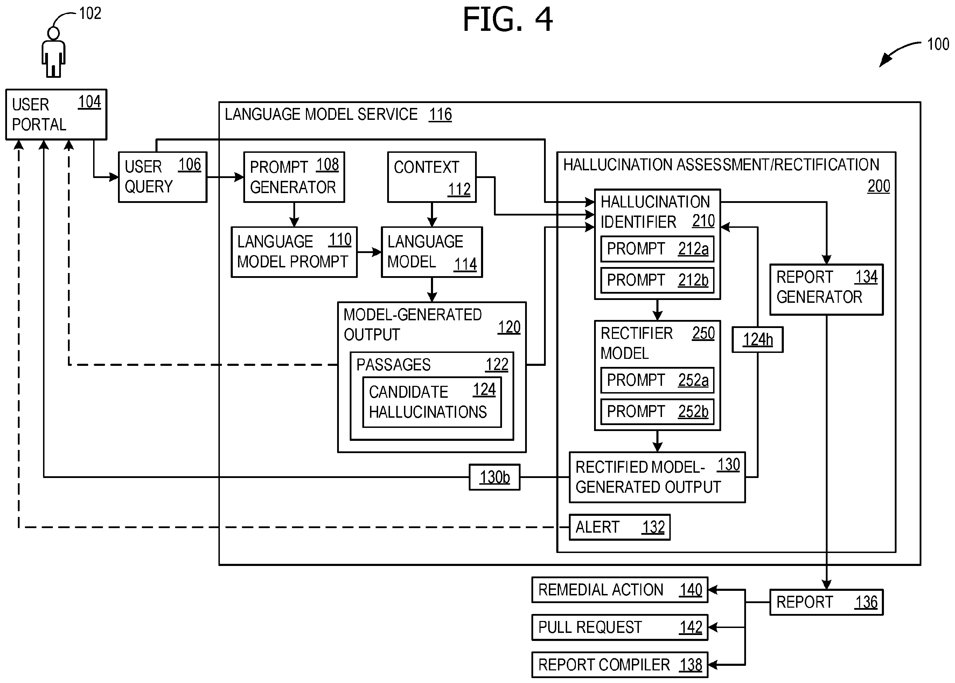

In some examples, rectifier model 250 is used only once, and rectified model-generated output 130 is provided (transmitted) to user portal 104 as the response to user query 106, without also checking rectified model-generated output 130 for hallucinations (i.e., an open loop operation). Some examples, however, provide rectified model-generated output 130 back to hallucination identifier 210, to check for hallucinations again (see the dashed line in FIG. 1 from rectifier model 250 to hallucination identifier 210), and if additional hallucinations are identified, rectifier model 250 is used to further refine its own output. This may cycle until some quality criteria for language model output is reached, and then the final result is sent (transmitted) to user portal 104. This looping operation is described in further detail in relation to FIG. 4.

In some examples, in order to reduce latency for user 102 waiting for a response to user query 106, model-generated output 120 from language model 114 is provided to user portal 104 initially, while hallucination identifier 210 is checking for hallucinations. If no hallucinations are found, user 102 has model-generated output 120 quickly, without any delay introduced by hallucination assessment/rectification service 200. If, however, a hallucination is identified within model-generated output 120, hallucination assessment/rectification service 200 sends an alert 132 to user portal 104 to inform user 102 that a replacement for model-generated output 120 (i.e., rectified model-generated output 130) is coming.

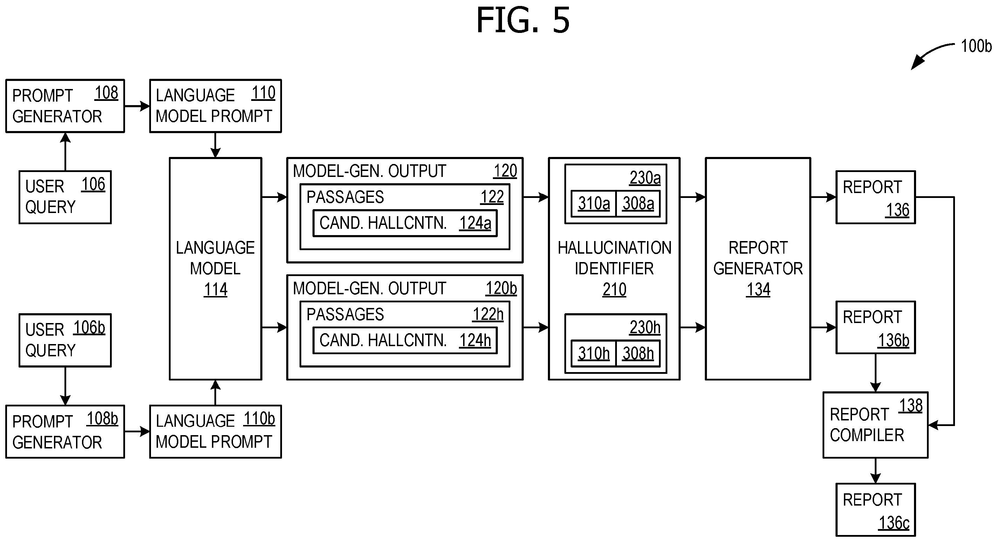

Some examples may not use rectifier model 250, and instead a report generator 134 generates a hallucination report 136 using the output of hallucination identifier 210. Hallucination report 136 includes information about hallucinations identified within model-generated output 120 (e.g., candidate hallucinations 124). Hallucination report 136 may be used to determine a remedial action 140 (e.g., debugging, further training, etc.) needed to improve the performance of language model 114, or used in a decision whether to deploy or merge a pull request (PR) 142 for language model 114. In some examples, hallucination report 136 is sent to a report compiler 138, which may be used for prompt engineering efforts. The various uses of hallucination report 136 are described in further detail in relation to FIG. 5.

FIG. 2 illustrates further detail for hallucination assessment/rectification service 200. Hallucination identifier 210 uses a prompt 212a and generates identifier output 214. Prompt 212a has instructions 220, examples 226, and dynamic content 228. Instructions 220 includes general instructions 222 that explains the role of hallucination identifier 210 and provides detailed instructions on how to perform that role, such as with instructions on how to recognize hallucinations, how to explain how they are hallucinations, and how to score the probability of the hallucinations. Instructions 220 also includes hallucination definitions 224. In some examples, there are hallucination categories such as contextual consistency, numeric accuracy, and internal coherence.

A contextual consistency hallucination occurs when identifier output 214 contains details which are inconsistent with context 112. A numeric accuracy hallucination occurs when identifier output 214 contains numeric data that is inconsistent with context 112. An internal coherence hallucination occurs when identifier output 214 has inconsistencies or contradictions within the generated response. Some examples may use additional and/or different hallucination categories.

Examples 226 provides static examples of responses along with an example context (dataset). These static examples are logically consistent with the system instructions, and guide how to reason and generate responses. Dynamic content 228 includes user query 106, context 112, and model-generated output 120 from language model 114. In some examples, context 112 may not be included in its entirety, but rather context 112 is referenced when there is external content. In general, dynamic content 228 may be described as containing an identification of the context 112, whether quoted or referenced.

Identifier output 214 has an inner monologue 216 and a response 218. Inner monologue 216 identifies the internal reasoning, breaking down model-generated output 120 passage by passage (e.g., sentence by sentence), analyzing each one. Response 218 includes passages 122 extracted from model-generated output 120, with passages containing hallucinations identified using hallucination tags 230, and passages that are clear of hallucinations identified with other markings 232. In some examples, each of hallucination tags 230 is in the format [Hallucination category | Reasoning | Probability score].

An example is shown using FIGs. 3A-3I (i.e., all of FIGs. 3A-3I are for a common example). FIG. 3A is an example of context 112 that has data about a basketball player. FIG. 3B is an example user query 106, which reads "Create a paragraph from the dataset that argues that Marcus should be the MVP. Compare his attributes, stats, and advanced stats to other players. Numerical differences in height, points, rebounds, assists, etc. between Marcus and other players should be mentioned." FIG. 3C is an example of model-generated output 120, generated in response to the example user query 106 of FIG. 3B, and which has some candidate hallucinations 124 within passages 122.

FIG. 3D is an example of inner monologue 216. A passage 122a (the first sentence of model-generated output 120) has a candidate hallucination 124a. An indication of plausibility 302a states that passage 122a is plausible, but reasoning 304a indicates that there is a hallucination. A score 308a (i.e., a hallucination score) is explained with score reasoning 306a. The second sentence, a passage 122b, is not identified as a hallucination. An indication of plausibility 302b states that passage 122b is plausible and is not a hallucination.

A passage 122c (the third sentence) has a candidate hallucination 124c. Reasoning 304c indicates that there is a hallucination, and a score 308c is explained with score reasoning 306c. A passage 122d has a candidate hallucination 124d. Reasoning 304d indicates that there is a hallucination, and a score 308d is explained with score reasoning 306d. A passage 122e has a candidate hallucination 124e. Reasoning 304e indicates that there is a hallucination, and a score 308e is explained with score reasoning 306e.

A passage 122f is not identified as a hallucination. An indication of plausibility 302f states that passage 122f is plausible and is not a hallucination. A passage 122g (the final sentence of model-generated output 120) has a candidate hallucination 124g. Reasoning 304g indicates that there is a hallucination, and a score 3088 is explained with score reasoning 306g.

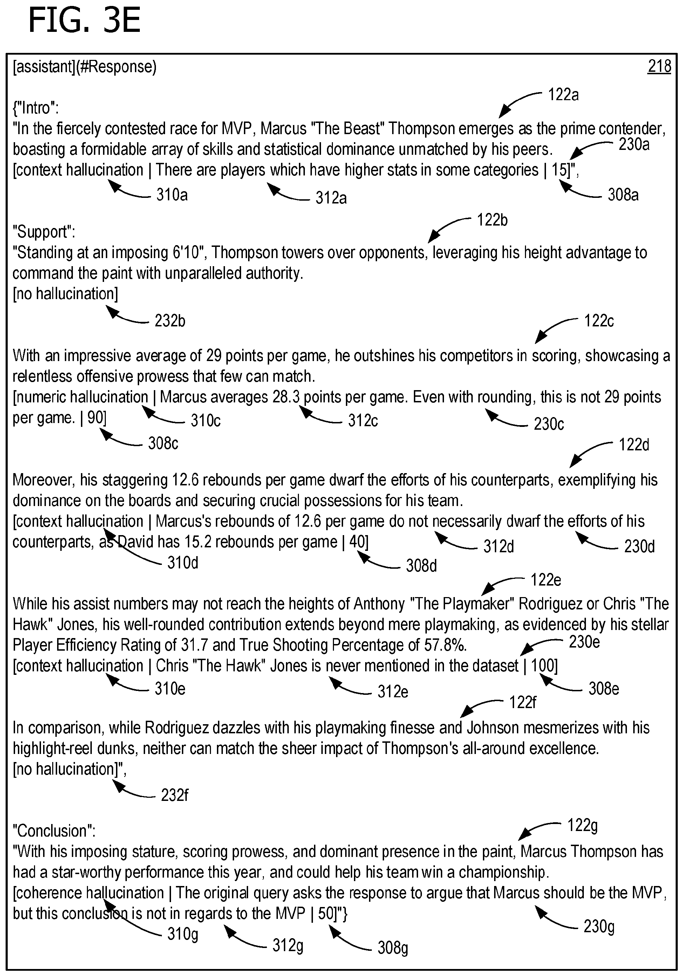

FIG. 3E is an example of response 218. Passage 122a is tagged with a hallucination tag 230a that has a hallucination category 310a (context hallucination), score 308a, and an explanation 312a of score 308a. Passage 122b is tagged with a marking 232a that is another type of tag indicating that passage 122b is not a hallucination. In this example, both hallucination tag 230a and marking 232a are tags for their respective passages, and may both be considered, in general, to be markings.

Passage 122acis tagged with a hallucination tag 230c that has a hallucination category 310c (numeric hallucination), score 308c, and an explanation 312c of score 308c. Passage 122d is tagged with a hallucination tag 230d that has a hallucination category 310d (context hallucination), score 308d, and an explanation 312d of score 308d. Passage 122e is tagged with a hallucination tag 230e that has a hallucination category 310e (context hallucination), score 308e, and an explanation 312e of score 308e.

Passage 122f is tagged with a marking 232f indicating that passage 122f is not a hallucination. Passage 122g is tagged with a hallucination tag 230g that has a hallucination category 310g (coherence hallucination), score 308g, and an explanation 312g of score 308g. For internal coherence hallucinations, the explanation (here, explanation 312g) may identify which of contradictory (or inconsistent) statements is correct. This will assist rectifier model 250 in correcting the hallucination.

Returning to FIG. 2, rectifier model 250 uses a prompt 252a, which is structured similarly to prompt 212a, and generates rectifier output 254. Prompt 252a has instructions 260, examples 226, and dynamic content 288. Instructions 220 includes general instructions 262 that explains the role of rectifier model 250 and provides detailed instructions on how to perform that role, such as with instructions to use hallucination tags 230 to identify and rewrite passages with hallucinations, and leave passages without hallucinations intact.

Examples 266 provides static examples of responses along with an example context (dataset). These static examples are logically consistent with the system instructions, and guide how to reason and generate responses. Dynamic content 268 includes user query 106, context 112, and response 218 from hallucination identifier 210. In some examples, context 112 may not be included in its entirety, but rather context 112 is referenced when there is external content. In general, dynamic content 268 may be described as containing an identification of the context 112, whether quoted or referenced.

Rectifier output 254 has an inner monologue 256 and a response 258 that comprises rectified model-generated output 130. Inner monologue 256 identifies the internal reasoning, breaking down response 218 passage by passage, analyzing each one. Response 258 includes intact passages 122 extracted from response 218 that do not contain hallucinations, and rewritten passages from response 218 that had been tagged with one of hallucination tags 230.

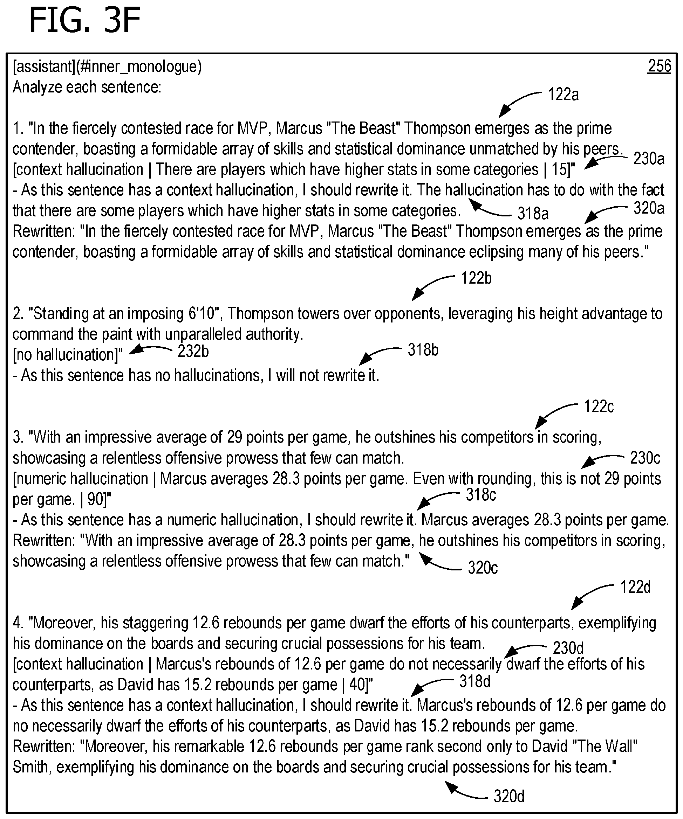

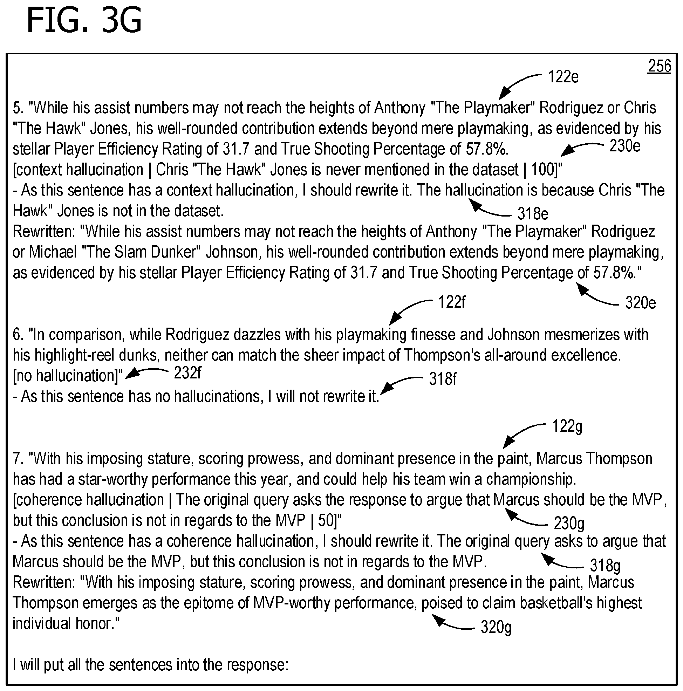

Inner monologue 256 is split between FIGs. 3F and 3G; the first portion is shown in FIG. 3F and the remainder in FIG. 3G. In inner monologue 256, reasoning 318a is applied to passage 122a, resulting in a rewritten passage 320a. Reasoning 318b relies on marking 232b to indicate that passage 122b will remain intact and not be rewritten.

Reasoning 318c is applied to passage 122c, resulting in a rewritten passage 320c. Reasoning 318d is applied to passage 122d, resulting in a rewritten passage 320d. Reasoning 318e is applied to passage 122e, resulting in a rewritten passage 320e. Reasoning 318f relies on marking 232f to indicate that passage 122f will remain intact and not be rewritten. Reasoning 318g is applied to passage 122g, resulting in a rewritten passage 320g.

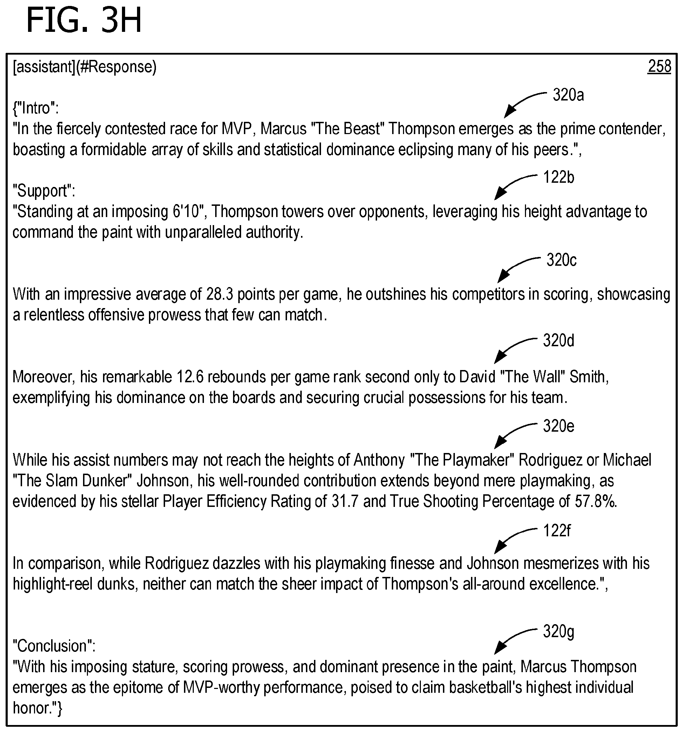

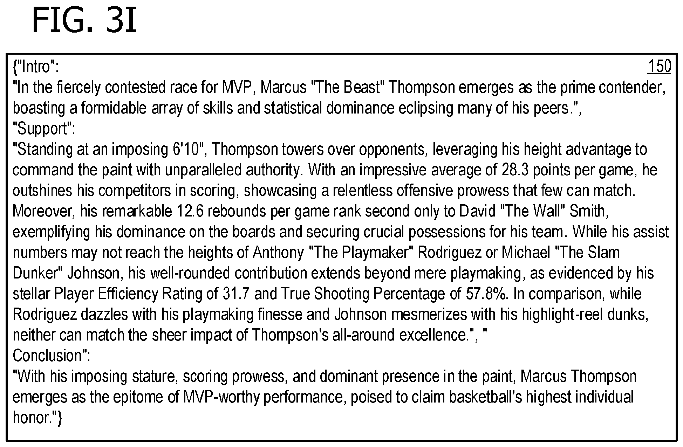

FIG. 3H shows an example of response 258. Rewritten passage 320a replaces passage 122a; passage 122b remains; rewritten passage 320c replaces passage 122c; rewritten passage 320d replaces passage 122d; rewritten passage 320e replaces passage 122e; passage 122f remains; and rewritten passage 320g replaces passage 122g. FIG. 3I shows a clean example of rectified model-generated output 130.

FIG. 4 illustrates further detail for a looping operation, in which rectified model-generated output 130 is sent back to hallucination identifier 210 to further check for hallucinations. Initially when hallucination identifier 210 receives model-generated output 120, prompt 212a is generated, as described above, and rectifier model 250 uses prompt 252a. In this scenario, rectified model-generated output 130 has a candidate hallucination 124h. When rectified model-generated output 130 is sent back to hallucination identifier 210, prompt 212b is generated, with rectified model-generated output 130 in dynamic content 228 in place of model-generated output 120. In this next pass, rectifier model 250 uses prompt 252b, which has candidate hallucination 124h tagged, and rectifier model 250 generates further rectified model-generated output 130b for transmission to user portal 104.

FIG. 5 also illustrates further detail for another class of use case. In FIG. 5, architecture 100 is adapted into an architecture 100b, in which there are two user queries and two prompt generators. Prompt generator 108 generates language model prompt 110 using user query 106. Language model 114 produces model-generated output 120 (with passages 122), which is passed through hallucination identifier 210, as described previously. Hallucination tag 230a identifies at least hallucination category 310a and score 308a for candidate hallucination 124a, and report generator 134 generates hallucination report 136 that indicates at least the performance of user query 106, prompt generator 108, language model 114, and hallucination identifier 210, because each of these components is in the process flow.

A different prompt generator 108b generates a different language model prompt 110b using a different user query 106b. Language model 114 produces model-generated output 120b (with passages 122h), which is passed through hallucination identifier 210. Hallucination tag 230y identifies at least a hallucination category 310h and a score 308h for a candidate hallucination 124h, and report generator 134 generates a hallucination report 136b that indicates at least the performance of user query 106b, prompt generator 108b, language model 114, and hallucination identifier 210, because each of these components is in the process flow.

Report compiler 138 generates a report 136c using hallucination report 136 and hallucination report 136b. Report 136c enables comparison of the performance difference between user query 106 plus prompt generator 108 versus user query 106b plus prompt generator 108b. This enables determination of the impact of phrasing user queries and/or prompt templates on hallucination performance.

This type of testing scheme may be adapted to other testing scenarios, such as different user queries sent to the same prompt generator (i.e. to isolate query phrasing as a hallucination factor), the same user query being sent to different prompt generators, the same language model prompt being sent to different language models, the same model-generated output being sent to different hallucination identifiers, and various combinations or other changes.

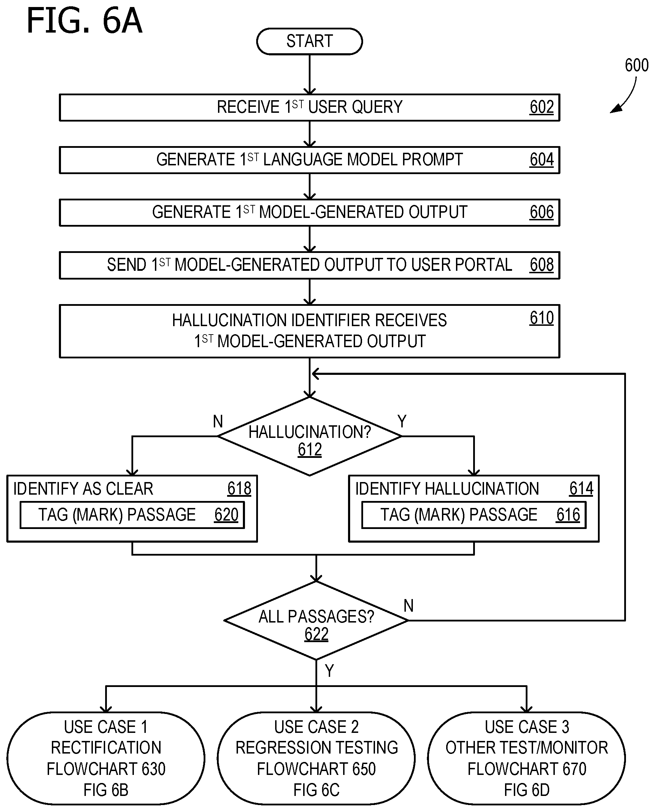

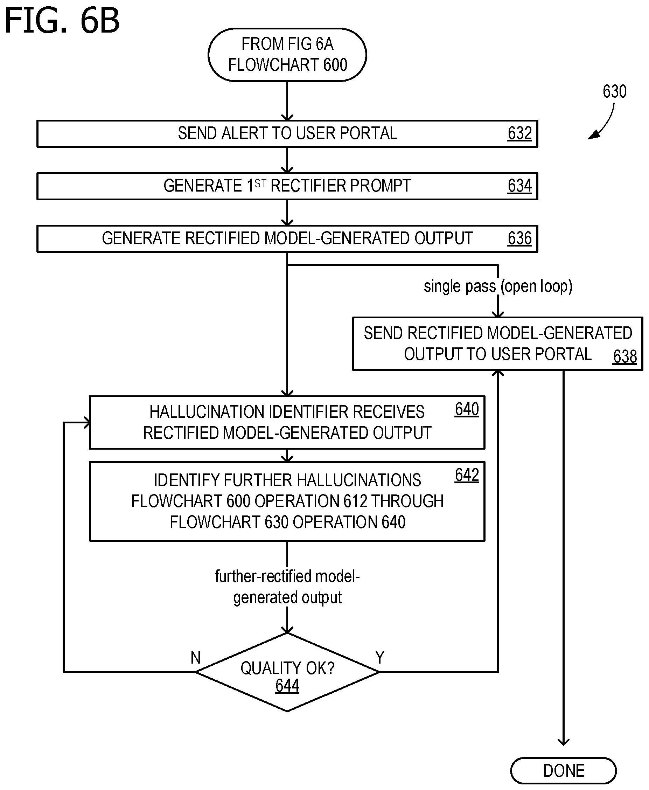

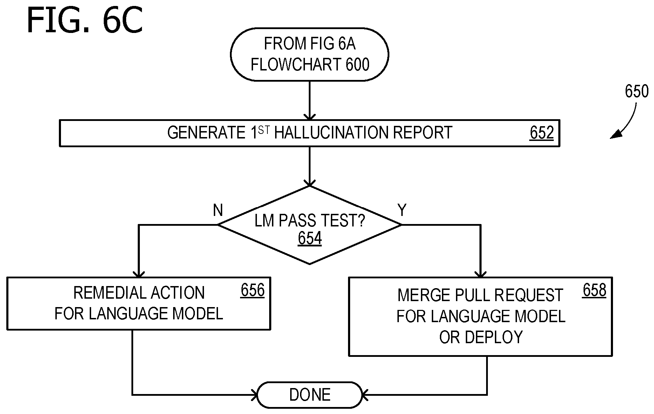

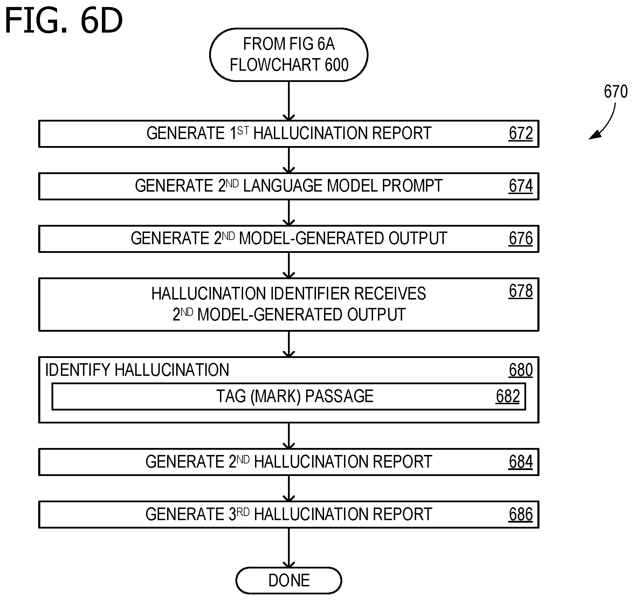

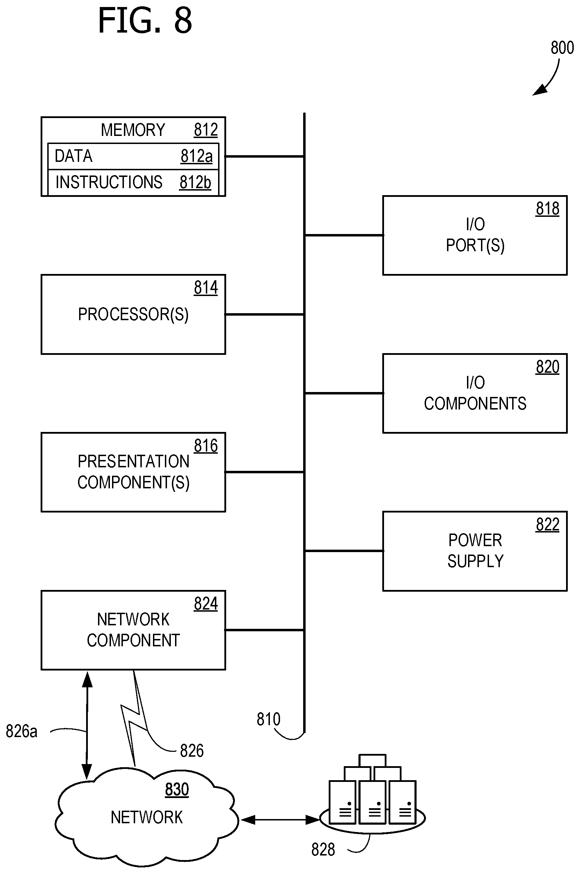

FIG. 6A shows a flowchart 600 illustrating exemplary operations that may be performed by architecture 100, and which may be combined with any of flowcharts 630, 650, and 670 of FIGs. 6B, 6C, and 6D, respectively. In some examples, operations described for flowcharts 600, 630, 650, and 670 are performed by computing device 800 of FIG. 8. Flowchart 600 commences with user 102 submitting user query 106 in operation 602. Language model prompt 110 is generated using user query 106 in operation 604.

In operation 606, language model 114 generates model-generated output 120 using context 112 and language model prompt 110, in response to user query 106. In some examples, model-generated output 120 is transmitted to user portal 104 in operation 608, prior to transmitting rectified model-generated output 130 (i.e., prior to checking for hallucinations. This reduces latency, as perceived by user 102. However some examples skip operation 608 and do not send model-generated output 120 to user portal 104, but instead send only rectified model-generated output 130 to user portal 104 as described below (unless model-generated output 120 has no hallucinations, in which case model-generated output 120 and only rectified model-generated output 130 are the same).

Hallucination identifier 210 receives model-generated output 120 in operation 610 and assesses each passage of model-generated output 120 as being a hallucination or not being a hallucination using operations 612-620. Decision operation 612 makes a determination about whether the current passage being assessed has a candidate hallucination. If so, each passage is marked (tagged) in accordance with the assessment of that passage. Marking a passage as a hallucination comprises marking the passage with a hallucination tag comprising a hallucination category and a score. For example, in operation 614, hallucination identifier 210 identifies candidate hallucination 124a within model-generated output 120, using at least user query 106 and context 112 that had been used to generate model-generated output 120. Thus, model-generated output 120 contains at least candidate hallucination 124a. In operation 616, hallucination identifier 210 marks passage 122a of model-generated output 120 with hallucination tag 230a. Hallucination tag 230a includes hallucination category 310a, score 308a, explanation 312a of score 308a. In some examples, indication of plausibility 302a may also be included. Hallucination category 310a may be any of: contextual consistency, numeric accuracy, and internal coherence.

If there is no hallucination to identify in a particular passage, that passage is also marked accordingly. For example, in operation 618, passage 122b of model-generated output 120 is identified as not having a hallucination, using at least user query 106 and context 112. Based on at least identifying that the second passage is not a hallucination, operation 620 marks passage 122b as not a hallucination, such as using marking 232b. Some examples may also include indication of plausibility 302b. Decision operation 622 determines whether all of passages 122 have been checked for hallucinations. If not, flowchart 600 returns to decision operation 612 for the next passage, until all remaining passages have been assessed.

When all of passages 122 have been checked for hallucination, flowchart 600 then moves to one of flowchart 630 of FIG. 6B, flowchart 650 of FIG. 6C, or flowchart 670 of FIG. 6D, depending on the use case. Some examples may perform more than one of flowcharts 630, 650, and 670 after competing flowchart 600.

Flowchart 630 of FIG. 63B is used for rectification of hallucinations. In some examples (if model-generated output 120 had already been sent to user portal 104) operation 632 transmits alert 132 that a hallucination has been identified, to user portal 104, based on at least identifying candidate hallucination 124a. Rectifier prompt 252a is generated in operation 634. Rectifier prompt 252a includes at least passage 122a, hallucination tag 230a, and an identification of context 112 (quoted or referenced). Passage 122b is marked as not being a hallucination in rectifier prompt 252a. Rectifier prompt 252a further comprises each remaining passage of model-generated output 120 and markings (i.e., hallucination tags 230 or markings 232) for the remaining passages 122.

In operation 636, rectifier model 250 generates rectified model-generated output 130 using at least rectifier prompt 252a and context 112. For single pass (i.e. open loop) examples, rectified model-generated output 130 is then transmitted to user portal 104 in operation 638, and flowchart 630 is completed.

However, for iterating examples, hallucination identifier 210 receives rectified model-generated output 130 in operation 640, and identifies further hallucinations in operation 642. This is essentially a repeat of decision operation 612 (of flowchart 600) through operation 636 of flowchart 630, although this time, operation 634 generates rectifier prompt 252b including at least candidate hallucination 124h, and operation 636 generates further rectified model-generated output 130b using at least rectifier prompt 252b and context 112.

Different options exist for looping. Some examples, may loop only once and then quit. Some examples may loop until no more hallucinations are identified (i.e., the highest quality criteria). Some examples may loop until some threshold quality criteria re met, such only low-scores for candidate hallucinations and/or a maximum count of candidate hallucinations. This is controlled by decision operation 644. For further looping, flowchart 630 returns to operation 640. When complete, flowchart 630 moves to operation 638 to transmit the most-refined version of further rectified model-generated output 130b to user portal 104, and then concludes.

Flowchart 650 of FIG. 6C is used for regression testing of language model 114. Hallucination report 136 is generated in operation 652. Hallucination report 136 includes at least passage 122a and hallucination tag 230a, and may also include marking 232b indicating that passage 122b is not a hallucination. Hallucination report 136 further includes language model prompt 110. Decision operation 654 determines whether language model 114 passes the relevant performance criteria. If not, operation 656 aborts merging PR 142 and identifies or performs remedial action 140 for language model 114. If, however, language model 114 does pass the relevant performance criteria, operation 658 merges PR 142 for language model 114, or may deploy language model 114.

Flowchart 650 of FIG. 6C is used for performance monitoring, prompt engineering, or other testing. Hallucination report 136 is generated in operation 672, and language model prompt 110b is generated in operation 674, using user query 106. Language model 114 generates model-generated output 120b using context 112 and language model prompt 110b in operation 676. Hallucination identifier 210 receives model-generated output 120b in operation 678.

In operation 680, hallucination identifier 210 identifies candidate hallucination 124h within model-generated output 120b, using at least user query 106b and context 112. This comprises operation 682, which marks a passage of model-generated output 120b, containing candidate hallucination 124h, with hallucination tag 230h, Hallucination tag 230h includes at least hallucination category 310h and score 308h. Operation 684 generates hallucination report 136b, which includes at least the passage with the hallucination, hallucination tag 230h, and language model prompt 110b. This may be iterated for more language model prompts or user queries. Operation 686 generates report 136c using hallucination report 136 and hallucination report 136b. Report 136c indicates the dependence of hallucination severity on language model prompt generation.

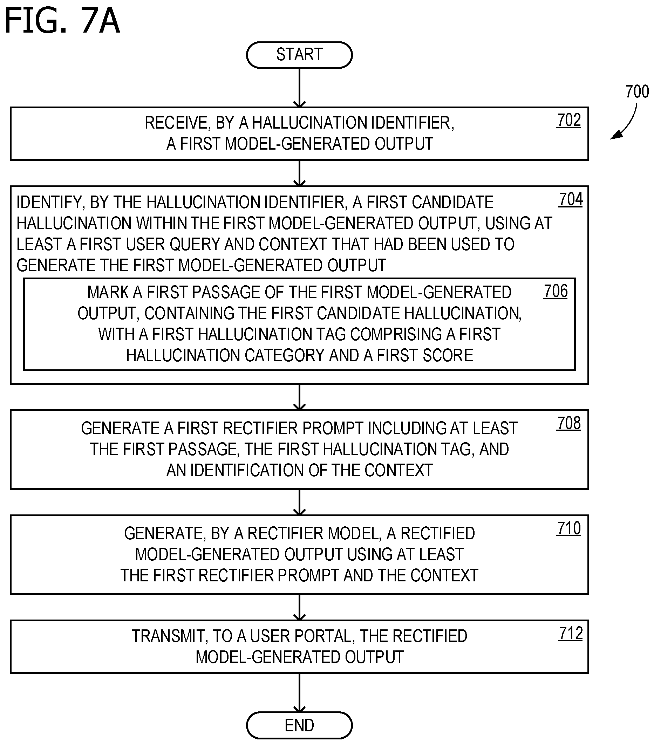

FIG. 7A shows a flowchart 700 illustrating exemplary operations that may be performed by architecture 100. In some examples, operations described for flowchart 700 are performed by computing device 800 of FIG. 8. Flowchart 700 commences with operation 702, which includes receiving, by a hallucination identifier, a first model-generated output. Operation 704 includes identifying, by the hallucination identifier, a first candidate hallucination within the first model-generated output, using at least a first user query and context that had been used to generate the first model-generated output. Identifying the first candidate hallucination in operation 704 uses operation 706, which includes marking a first passage of the first model-generated output, containing the first candidate hallucination, with a first hallucination tag comprising a first hallucination category and a first score.

Operation 708 includes generating a first rectifier prompt including at least the first passage, the first hallucination tag, and an identification of the context. Operation 710 includes generating, by a rectifier model, a rectified model-generated output using at least the first rectifier prompt and the context. Operation 712 includes transmitting, to a user portal, the rectified model-generated output.

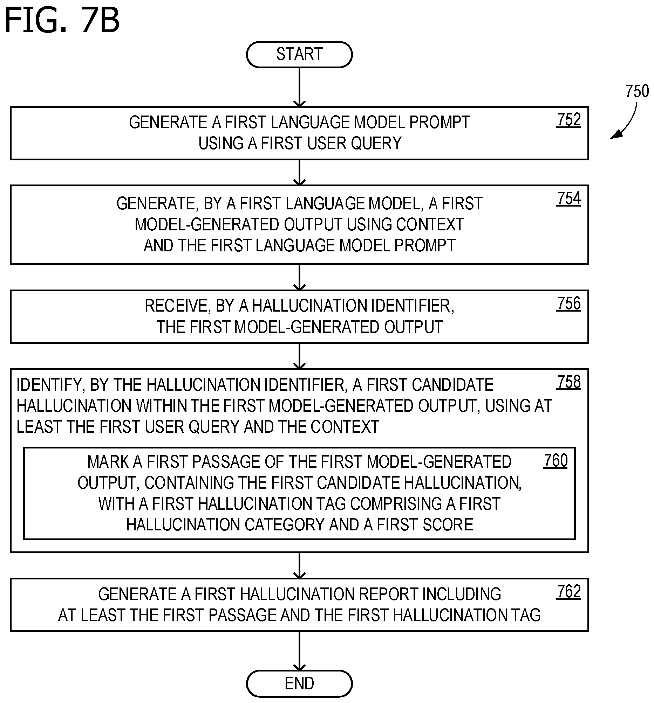

FIG. 7B shows a flowchart 750 illustrating exemplary operations that may be performed by architecture 100. In some examples, operations described for flowchart 750 are performed by computing device 800 of FIG. 8. Flowchart 750 commences with operation 752, which includes generating a first language model prompt using a first user query. Operation 754 includes generating, by a first language model, a first model-generated output using context and the first language model prompt.

Operation 756 includes receiving, by a hallucination identifier, the first model-generated output. Operation 758 includes identifying, by the hallucination identifier, a first candidate hallucination within the first model-generated output, using at least the first user query and the context. Identifying the first candidate hallucination in operation 758 uses operation 760, which includes marking a first passage of the first model-generated output, containing the first candidate hallucination, with a first hallucination tag comprising a first hallucination category and a first score. Operation 762 includes generating a first hallucination report including at least the first passage and the first hallucination tag.

### Additional Examples

An example system comprises: a processor; and a computer-readable medium storing instructions that are operative upon execution by the processor to: receive, by a hallucination identifier, a first model-generated output; identify, by the hallucination identifier, a first candidate hallucination within the first model-generated output, using at least a first user query and context that had been used to generate the first model-generated output, wherein identifying the first candidate hallucination comprises: marking a first passage of the first model-generated output, containing the first candidate hallucination, with a first hallucination tag comprising a first hallucination category and a first score; generate a first rectifier prompt including at least the first passage, the first hallucination tag, and an identification of the context; generate, by a rectifier model, a rectified model-generated output using at least the first rectifier prompt and the context; and transmit, to a user portal, the rectified model-generated output.

Another example system comprises: a processor; and a computer-readable medium storing instructions that are operative upon execution by the processor to: generate a first language model prompt using a first user query; generate, by a first language model, a first model-generated output using context and the first language model prompt; receive, by a hallucination identifier, the first model-generated output; identify, by the hallucination identifier, a first candidate hallucination within the first model-generated output, using at least the first user query and the context, wherein identifying the first candidate hallucination comprises: marking a first passage of the first model-generated output, containing the first candidate hallucination, with a first hallucination tag comprising a first hallucination category and a first score; and generate a first hallucination report including at least the first passage and the first hallucination tag.

An example computer-implemented method comprises: receiving, by a hallucination identifier, a first model-generated output; identifying, by the hallucination identifier, a first candidate hallucination within the first model-generated output, using at least a first user query and context that had been used to generate the first model-generated output, wherein identifying the first candidate hallucination comprises: marking a first passage of the first model-generated output, containing the first candidate hallucination, with a first hallucination tag comprising a first hallucination category and a first score; generating a first rectifier prompt including at least the first passage, the first hallucination tag, and an identification of the context; generating, by a rectifier model, a rectified model-generated output using at least the first rectifier prompt and the context; and transmitting, to a user portal, the rectified model-generated output.

Another example computer-implemented method comprises: generating a first language model prompt using a first user query; generating, by a first language model, a first model-generated output using context and the first language model prompt; receiving, by a hallucination identifier, the first model-generated output; identifying, by the hallucination identifier, a first candidate hallucination within the first model-generated output, using at least the first user query and the context, wherein identifying the first candidate hallucination comprises: marking a first passage of the first model-generated output, containing the first candidate hallucination, with a first hallucination tag comprising a first hallucination category and a first score; and generating a first hallucination report including at least the first passage and the first hallucination tag.

One or more example computer storage devices has computer-executable instructions stored thereon, which, on execution by a computer, cause the computer to perform operations comprising: receiving, by a hallucination identifier, a first model-generated output; identifying, by the hallucination identifier, a first candidate hallucination within the first model-generated output, using at least a first user query and context that had been used to generate the first model-generated output, wherein identifying the first candidate hallucination comprises: marking a first passage of the first model-generated output, containing the first candidate hallucination, with a first hallucination tag comprising a first hallucination category and a first score; generating a first rectifier prompt including at least the first passage, the first hallucination tag, and an identification of the context; generating, by a rectifier model, a rectified model-generated output using at least the first rectifier prompt and the context; and transmitting, to a user portal, the rectified model-generated output.

One or more additional example computer storage devices has computer-executable instructions stored thereon, which, on execution by a computer, cause the computer to perform operations comprising: generating a first language model prompt using a first user query; generating, by a first language model, a first model-generated output using context and the first language model prompt; receiving, by a hallucination identifier, the first model-generated output; identifying, by the hallucination identifier, a first candidate hallucination within the first model-generated output, using at least the first user query and the context, wherein identifying the first candidate hallucination comprises: marking a first passage of the first model-generated output, containing the first candidate hallucination, with a first hallucination tag comprising a first hallucination category and a first score; and generating a first hallucination report including at least the first passage and the first hallucination tag.

Alternatively, or in addition to the other examples described herein, examples include any combination of the following:
- identifying that a second passage of the first model-generated output is not a hallucination using at least the context;
- based on at least identifying that the second passage is not a hallucination, marking the second passage as not a hallucination in the rectifier prompt;
- assessing each remaining passage of the first model-generated output as being a hallucination or not being a hallucination;
- marking each remaining passage in accordance with the assessment of that passage, wherein marking a passage as a hallucination comprises marking the passage with a hallucination tag comprising a hallucination category and a score, and wherein the first rectifier prompt further comprises each remaining passage of the first model-generated output and the markings for the remaining passages;
- the first hallucination tag further includes a first explanation of the first score;
- the first hallucination category is selected from the list consisting of: contextual consistency, numeric accuracy, and internal coherence;
- receiving, by the hallucination identifier, the rectified model-generated output;
- identifying, by the hallucination identifier, a second candidate hallucination within the rectified model-generated output, using at least the first user query and the context;
- generating a second rectifier prompt including at least the second candidate hallucination;
- generating, by the rectifier model, a further rectified model-generated output using at least the second rectifier prompt and the context;
- prior to transmitting the rectified model-generated output, transmitting, to the user portal, the first model-generated output;
- based on at least identifying the first candidate hallucination, transmitting, to the user portal an alert that a hallucination has been identified;
- the hallucination identifier comprises a language model;
- the rectifier model comprises a language model;
- generating a first language model prompt using the first user query;
- a first language model generates the first model-generated output using the context and a first language model prompt, in response to the first user query;
- identifying that the second passage of the first model-generated output is not a hallucination further uses the first user query;
- the first hallucination tag further comprises an indication of plausibility;
- generating a second language model prompt using the first user query;
- generating, by the first language model, a second model-generated output using the context and the second language model prompt;
- receiving, by the hallucination identifier, the second model-generated output;
- identifying, by the hallucination identifier, a second candidate hallucination within the second model-generated output, using at least the second user query and the context, wherein identifying the second candidate hallucination comprises:
- marking a second passage of the second model-generated output, containing the second candidate hallucination, with a second hallucination tag comprising a second hallucination category and a second score;
- generating a second hallucination report including at least the second passage, the second hallucination tag, and the second language model prompt, wherein the first hallucination report further comprises the first language model prompt; and
- generating a third hallucination report using the first hallucination report and the second hallucination report, the third hallucination report indicating a dependence of hallucination severity on language model prompt generation.

While the aspects of the disclosure have been described in terms of various examples with their associated operations, a person skilled in the art would appreciate that a combination of operations from any number of different examples is also within scope of the aspects of the disclosure.

### Example Operating Environment

FIG. 8 is a block diagram of an example computing device 800 (e.g., a computer storage device) for implementing aspects disclosed herein, and is designated generally as computing device 800. In some examples, one or more computing devices 800 are provided for an on-premises computing solution. In some examples, one or more computing devices 800 are provided as a cloud computing solution. In some examples, a combination of on-premises and cloud computing solutions are used. Computing device 800 is but one example of a suitable computing environment and is not intended to suggest any limitation as to the scope of use or functionality of the examples disclosed herein, whether used singly or as part of a larger set.

Neither should computing device 800 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 800 includes a bus 810 that directly or indirectly couples the following devices: computer storage memory 812 (i.e., a computer-readable medium), one or more processors 814, one or more presentation components 816, input/output (I/O) ports 818, I/O components 820, a power supply 822, and a network component 824. While computing device 800 is depicted as a seemingly single device, multiple computing devices 800 may work together and share the depicted device resources. For example, memory 812 may be distributed across multiple devices, and processor(s) 814 may be housed within different devices.

Bus 810 represents what may be one or more buses (such as an address bus, data bus, or a combination thereof). Although the various blocks of FIG. 8 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 8 and the references herein to a "computing device." Memory 812 may take the form of the computer storage media referenced below and operatively provide storage of computer-readable instructions, data structures, program modules and other data for the computing device 800. In some examples, memory 812 stores one or more of an operating system, a universal application platform, or other program modules and program data. Memory 812 is thus able to store and access data 812a and instructions 812b that are executable by processor 814 and configured to carry out the various operations disclosed herein. Thus, computing device 800 comprises a computer storage device having computer-executable instructions 812b stored thereon.

In some examples, memory 812 includes computer storage media. Memory 812 may include any quantity of memory associated with or accessible by the computing device 800. Memory 812 may be internal to the computing device 800 (as shown in FIG. 8), external to the computing device 800 (not shown), or both (not shown). Additionally, or alternatively, the memory 812 may be distributed across multiple computing devices 800, for example, in a virtualized environment in which instruction processing is carried out on multiple computing devices 800. For the purposes of this disclosure, "computer storage media," "computer storage memory," "memory," and "memory devices" are synonymous terms for the memory 812, and none of these terms include carrier waves or propagating signaling.

Processor(s) 814 may include any quantity of processing units that read data from various entities, such as memory 812 or I/O components 820. Specifically, processor(s) 814 are programmed to execute computer-executable instructions for implementing aspects of the disclosure. The instructions may be performed by the processor, by multiple processors within the computing device 800, or by a processor external to computing device 800. In some examples, the processor(s) 814 are programmed to execute instructions such as those illustrated in the flow charts discussed below and depicted in the accompanying drawings. Presentation component(s) 816 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 800, across a wired connection, or in other ways. I/O ports 818 allow computing device 800 to be logically coupled to other devices including I/O components 820, some of which may be built in. Example I/O components 820 include, for example but without limitation, a microphone, joystick, game pad, satellite dish, scanner, printer, wireless device, etc.

Computing device 800 may operate in a networked environment via the network component 824 using logical connections to one or more remote computers. In some examples, the network component 824 includes a network interface card and/or computer-executable instructions (e.g., a driver) for operating the network interface card. Communication between the computing device 800 and other devices may occur using any protocol or mechanism over any wired or wireless connection. In some examples, network component 824 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 824 communicates over wireless communication link 826 and/or a wired communication link 826a to a remote resource 828 (e.g., a cloud resource) across a computer network 830. Various different examples of communication links 826 and 826a include a wireless connection, a wired connection, and/or a dedicated link, and in some examples, at least a portion is routed through the internet.

Although described in connection with an example computing device 800, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic devices, and the like. Such systems or devices may accept input from the user in any way, including from input devices such as a keyboard or pointing device, via gesture input, proximity input (such as by hovering), and/or via voice input.

Alternatively, or in addition to the other examples described herein, examples include the following:
A. A system comprising: a processor; and
   a computer-readable medium storing instructions that are operative upon execution by the processor to:
   receive, by a hallucination identifier, a first model-generated output;
   identify, by the hallucination identifier, a first candidate hallucination within the first model-generated output, using at least a first user query and context that had been used to generate the first model-generated output, wherein identifying the first candidate hallucination comprises:
      marking a first passage of the first model-generated output, containing the first candidate hallucination, with a first hallucination tag comprising a first hallucination category and a first score;
      generate a first rectifier prompt including at least the first passage, the first hallucination tag, and an identification of the context;
      generate, by a rectifier model, a rectified model-generated output using at least the first rectifier prompt and the context; and
      transmit, to a user portal, the rectified model-generated output.
B. The system of example A, wherein the instructions are further operative to:
   identify that a second passage of the first model-generated output is not a hallucination using at least the context; and
   based on at least identifying that the second passage is not a hallucination, marking the second passage as not a hallucination in the first rectifier prompt.
C. The system of example A, wherein the instructions are further operative to:
   assess each remaining passage of the first model-generated output as being a hallucination or not being a hallucination; and
   mark each remaining passage in accordance with the assessment of that passage, wherein marking a passage as a hallucination comprises marking the passage with a hallucination tag comprising a hallucination category and a score, and wherein the first rectifier prompt further comprises each remaining passage of the first model-generated output and the markings for the remaining passages.
D. The system of example A, wherein the first hallucination tag further includes a first explanation of the first score.
E. The system of example A, wherein the first hallucination category is selected from the list consisting of:
   contextual consistency, numeric accuracy, and internal coherence.
F. The system of example A, wherein the instructions are further operative to:
   receive, by the hallucination identifier, the rectified model-generated output;
   identify, by the hallucination identifier, a second candidate hallucination within the rectified model-generated output, using at least the first user query and the context;
   generate a second rectifier prompt including at least the second candidate hallucination; and
   generate, by the rectifier model, a further rectified model-generated output using at least the second rectifier prompt and the context.
G. The system of example A, wherein the instructions are further operative to:
   prior to transmitting the rectified model-generated output, transmit, to the user portal, the first model-generated output; and
   based on at least identifying the first candidate hallucination, transmit, to the user portal an alert that a hallucination has been identified.
H. A computer-implemented method comprising:
   receiving, by a hallucination identifier, a first model-generated output;
   identifying, by the hallucination identifier, a first candidate hallucination within the first model-generated output, using at least a first user query and context that had been used to generate the first model-generated output, wherein identifying the first candidate hallucination comprises:
      marking a first passage of the first model-generated output, containing the first candidate hallucination, with a first hallucination tag comprising a first hallucination category and a first score;
      generating a first rectifier prompt including at least the first passage, the first hallucination tag, and an identification of the context;
      generating, by a rectifier model, a rectified model-generated output using at least the first rectifier prompt and the context; and
      transmitting, to a user portal, the rectified model-generated output.
I. The computer-implemented method of example H, further comprising:
   identifying that a second passage of the first model-generated output is not a hallucination using at least the context; and
   based on at least identifying that the second passage is not a hallucination, marking the second passage as not a hallucination in the first rectifier prompt.
J. The computer-implemented method of example H, further comprising:
   assessing each remaining passage of the first model-generated output as being a hallucination or not being a hallucination; and
   marking each remaining passage in accordance with the assessment of that passage,
   wherein marking a passage as a hallucination comprises marking the passage with a hallucination tag comprising a hallucination category and a score, and wherein the first rectifier prompt further comprises each remaining passage of the first model-generated output and the markings for the remaining passages.
K. The computer-implemented method of example H, wherein the first hallucination tag further includes a first explanation of the first score.
L. The computer-implemented method of example H, wherein the first hallucination category is selected from the list consisting of:
   contextual consistency, numeric accuracy, and internal coherence.
M. The computer-implemented method of example H, further comprising:
   receiving, by the hallucination identifier, the rectified model-generated output;
   identifying, by the hallucination identifier, a second candidate hallucination within the rectified model-generated output, using at least the first user query and the context;
   generating a second rectifier prompt including at least the second candidate hallucination; and
   generating, by the rectifier model, a further rectified model-generated output using at least the second rectifier prompt and the context.
N. The computer-implemented method of example H, further comprising:
   prior to transmitting the rectified model-generated output, transmitting, to the user portal, the first model-generated output; and
   based on at least identifying the first candidate hallucination, transmitting, to the user portal an alert that a hallucination has been identified.
O. A computer storage device having computer-executable instructions stored thereon, which, on execution by a computer, cause the computer to perform operations comprising:
   receiving, by a hallucination identifier, a first model-generated output;
   identifying, by the hallucination identifier, a first candidate hallucination within the first model-generated output, using at least a first user query and context that had been used to generate the first model-generated output, wherein identifying the first candidate hallucination comprises:
      marking a first passage of the first model-generated output, containing the first candidate hallucination, with a first hallucination tag comprising a first hallucination category and a first score;
      generating a first rectifier prompt including at least the first passage, the first hallucination tag, and an identification of the context;
      generating, by a rectifier model, a rectified model-generated output using at least the first rectifier prompt and the context; and
      transmitting, to a user portal, the rectified model-generated output.
   P. The computer storage device of example O, wherein the operations further comprise:
      identifying that a second passage of the first model-generated output is not a hallucination using at least the context; and
      based on at least identifying that the second passage is not a hallucination, marking the second passage as not a hallucination in the first rectifier prompt.
   Q. The computer storage device of example O, wherein the operations further comprise:
      assessing each remaining passage of the first model-generated output as being a hallucination or not being a hallucination; and
      marking each remaining passage in accordance with the assessment of that passage,
      wherein marking a passage as a hallucination comprises marking the passage with a hallucination tag comprising a hallucination category and a score, and wherein the first rectifier prompt further comprises each remaining passage of the first model-generated output and the markings for the remaining passages.
   R. The computer storage device of example O, wherein the first hallucination category is selected from the list consisting of:
      contextual consistency, numeric accuracy, and internal coherence.
   S. The computer storage device of example O, wherein the operations further comprise:
      receiving, by the hallucination identifier, the rectified model-generated output;
      identifying, by the hallucination identifier, a second candidate hallucination within the rectified model-generated output, using at least the first user query and the context;
      generating a second rectifier prompt including at least the second candidate hallucination; and
      generating, by the rectifier model, a further rectified model-generated output using at least the second rectifier prompt and the context.
   T. The computer storage device of example O, wherein the operations further comprise:
      prior to transmitting the rectified model-generated output, transmitting, to the user portal, the first model-generated output; and
      based on at least identifying the first candidate hallucination, transmitting, to the user portal an alert that a hallucination has been identified.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system comprising:
a processor (814); and
a computer-readable medium (812) storing instructions (812b) that are operative upon execution by the processor to:
receive (702), by a hallucination identifier (210), a first model-generated output (120);
identify (704), by the hallucination identifier, a first candidate hallucination (124a) within the first model-generated output, using at least a first user query (106) and context (112) that had been used to generate the first model-generated output, wherein identifying the first candidate hallucination comprises:
marking (706) a first passage (124a) of the first model-generated output, containing the first candidate hallucination, with a first hallucination tag (230a) comprising a first hallucination category (310a) and a first score (308a);
generate (708) a first rectifier prompt (252a) including at least the first passage, the first hallucination tag, and an identification of the context (112);
generate (710), by a rectifier model (250), a rectified model-generated output (130) using at least the first rectifier prompt and the context; and
transmit (712), to a user portal (104), the rectified model-generated output.

2. The system of claim 1, wherein the instructions are further operative to:
identify that a second passage of the first model-generated output is not a hallucination using at least the context; and
based on at least identifying that the second passage is not a hallucination, marking the second passage as not a hallucination in the first rectifier prompt.

3. The system of claim 1, wherein the instructions are further operative to:
assess each remaining passage of the first model-generated output as being a hallucination or not being a hallucination; and
mark each remaining passage in accordance with the assessment of that passage,
wherein marking a passage as a hallucination comprises marking the passage with a hallucination tag comprising a hallucination category and a score, and wherein the first rectifier prompt further comprises each remaining passage of the first model-generated output and the markings for the remaining passages.

4. The system of claim 1, wherein the first hallucination tag further includes a first explanation of the first score.

5. The system of claim 1, wherein the first hallucination category is selected from the list consisting of:
contextual consistency, numeric accuracy, and internal coherence.

6. The system of claim 1, wherein the instructions are further operative to:
receive, by the hallucination identifier, the rectified model-generated output;
identify, by the hallucination identifier, a second candidate hallucination within the rectified model-generated output, using at least the first user query and the context;
generate a second rectifier prompt including at least the second candidate hallucination; and
generate, by the rectifier model, a further rectified model-generated output using at least the second rectifier prompt and the context.

7. The system of claim 1, wherein the instructions are further operative to:
prior to transmitting the rectified model-generated output, transmit, to the user portal, the first model-generated output; and
based on at least identifying the first candidate hallucination, transmit, to the user portal an alert that a hallucination has been identified.

8. A computer-implemented method comprising:
receiving (702), by a hallucination identifier (210), a first model-generated output (120);
identifying (704), by the hallucination identifier, a first candidate hallucination (124a) within the first model-generated output, using at least a first user query (106) and context (112) that had been used to generate the first model-generated output, wherein identifying the first candidate hallucination comprises:
marking (706) a first passage (124a) of the first model-generated output, containing the first candidate hallucination, with a first hallucination tag (230a) comprising a first hallucination category (310a) and a first score (308a);
generating (708) a first rectifier prompt (252a) including at least the first passage, the first hallucination tag, and an identification of the context (112);
generating (710), by a rectifier model (250), a rectified model-generated output (130) using at least the first rectifier prompt and the context; and
transmitting (712), to a user portal (104), the rectified model-generated output.

9. The computer-implemented method of claim 8, further comprising:
identifying that a second passage of the first model-generated output is not a hallucination using at least the context; and
based on at least identifying that the second passage is not a hallucination, marking the second passage as not a hallucination in the first rectifier prompt.

10. The computer-implemented method of claim 8, further comprising:
assessing each remaining passage of the first model-generated output as being a hallucination or not being a hallucination; and
marking each remaining passage in accordance with the assessment of that passage, wherein marking a passage as a hallucination comprises marking the passage with a hallucination tag comprising a hallucination category and a score, and wherein the first rectifier prompt further comprises each remaining passage of the first model-generated output and the markings for the remaining passages.

11. The computer-implemented method of claim 8, wherein the first hallucination tag further includes a first explanation of the first score.

12. The computer-implemented method of claim 8, wherein the first hallucination category is selected from the list consisting of:
contextual consistency, numeric accuracy, and internal coherence.

13. The computer-implemented method of claim 8, further comprising:
receiving, by the hallucination identifier, the rectified model-generated output;
identifying, by the hallucination identifier, a second candidate hallucination within the rectified model-generated output, using at least the first user query and the context;
generating a second rectifier prompt including at least the second candidate hallucination; and
generating, by the rectifier model, a further rectified model-generated output using at least the second rectifier prompt and the context.

14. The computer-implemented method of claim 8, further comprising:
prior to transmitting the rectified model-generated output, transmitting, to the user portal, the first model-generated output; and
based on at least identifying the first candidate hallucination, transmitting, to the user portal an alert that a hallucination has been identified.

15. A computer storage device having computer-executable instructions stored thereon, which, on execution by a computer, cause the computer to perform operations comprising:
receiving (702), by a hallucination identifier (210), a first model-generated output (120);
identifying (704), by the hallucination identifier, a first candidate hallucination (124a) within the first model-generated output, using at least a first user query (106) and context (112) that had been used to generate the first model-generated output, wherein identifying the first candidate hallucination comprises:
marking (706) a first passage (124a) of the first model-generated output, containing the first candidate hallucination, with a first hallucination tag (230a) comprising a first hallucination category (310a) and a first score (308a);
generating (708) a first rectifier prompt (252a) including at least the first passage, the first hallucination tag, and an identification of the context (112);
generating (710), by a rectifier model (250), a rectified model-generated output (130) using at least the first rectifier prompt and the context; and
transmitting (712), to a user portal (104), the rectified model-generated output.
